# EUROPEAN PATENT APPLICATION

(11) **EP 4 012 287 A1**
(43) Date of publication of application: **15.06.2022**
(21) Application number: 20850963.8
(22) Date of filing: 06.08.2020
(51) Int. Cl.: F24H 4/02, H02J 3/32, H02J 3/38

(54) **LOAD CONTROL SYSTEM, POWER CONVERSION SYSTEM, DISTRIBUTED POWER SUPPLY SYSTEM, LOAD CONTROL METHOD, AND PROGRAM**

(30) Priority: 07.08.2019 JP 2019145798
(71) Applicant: Panasonic Intellectual Property Management Co., Ltd., Osaka-shi, Osaka 540-6207 (JP)
(72) Inventor: YAMADA, Yohei, Osaka-shi, Osaka 540-6207 (JP); MATSUOKA, Takashi, Osaka-shi, Osaka 540-6207 (JP)
(74) Representative: Appelt, Christian W.
(86) International application number: PCT/JP2020/030115
(87) International publication number: WO 2021/025096

(57) **Abstract**

An object of the present disclosure is to reduce the power consumption or the amount of power consumption of a load while a power converter is operating in an autonomous operation state. A load control system (1) includes a controller (11) configured to control a load. The load is configured to be operated by electric power supplied from at least one of a power converter (3) or a system power supply (2). The power converter (3) is configured to convert direct-current electric power supplied from a distributed power supply (5) into alternating-current electric power. An operation mode of the load includes a first operation mode in which the load is operated by the alternating-current electric power supplied from the system power supply (2) and a second operation mode in which power consumption of the load is lower or an amount of power consumption of the load is smaller than in the first operation mode. The controller (11) is configured to, when detecting that the power converter (3) is operating in an autonomous operation state, control the operation mode of the load such that the load operates in the second operation mode.

## Description

### Technical Field

The present disclosure relates to load control systems, power conversion systems, distributed power supply systems, load control methods, and programs. Specifically, the present disclosure relates to a load control system configured to control a load operated by electric power supplied from at least one of a system power supply or a distributed power supply, a power conversion system, a distributed power supply system, a load control method, and a program.

### Background Art

Patent Literature 1 discloses a hot-water supply system including: a heat pump device for heating water in a hot water storage tank; and a combustion-type heating device for heating hot-water supply water. The hot-water supply system further includes a power supply regulator (power converter) and a control means. The power supply regulator switches a power supply of the heat pump device (load) to one of a commercial power supply (system power supply), a photovoltaic generator, or a power storage device, or to a combination including two or more of the commercial power supply (system power supply), the photovoltaic generator, and the power storage device. The control means selects, in accordance with electric power suppliable from the photovoltaic generator to the heat pump device and the amount of power stored in the power storage device, one of the commercial power supply, the photovoltaic generator, or the power storage device, or the combination including two or more of the commercial power supply, the photovoltaic generator, and the power storage device as a possible choice for the power supply of the heat pump device.

Incidentally, the control means may select the power storage device as a possible choice for the power supply of the heat pump device during a power failure of the commercial power supply, and in this case, since the heat pump device has a higher rated power consumption than a general domestic electric appliance, the amount of power stored in the power storage device may be unintentionally reduced.

### Citation List

### Patent Literature

Patent Literature 1: JP 2016-80248 A

### Summary of Invention

It is an object of the present disclosure to provide a load control system, a power conversion system, a distributed power supply system, a load control method, and a program which are configured to reduce the power consumption or the amount of power consumption of a load while a power converter operates in an autonomous operation state.

A load control system of an aspect of the present disclosure includes a controller configured to control a load. The load is configured to be operated by electric power supplied from at least one of a power converter or a system power supply. The power converter is configured to convert direct-current electric power supplied from a distributed power supply into alternating-current electric power. An operation mode of the load includes a first operation mode in which the load is operated by the alternating-current electric power supplied from the system power supply and a second operation mode in which power consumption of the load is lower or an amount of power consumption of the load is smaller than in the first operation mode. The controller is configured to, when detecting that the power converter is operating in an autonomous operation state, control the operation mode of the load such that the load operates in the second operation mode.

A power conversion system of an aspect of the present disclosure includes the load control system and the power converter. The distributed power supply includes a storage battery.

A distributed power supply system of an aspect of the present disclosure includes the power conversion system and the distributed power supply. An operation state of the power converter includes an interconnect operation state and the autonomous operation state. The power converter is configured to supply alternating-current electric power to the load in the interconnect operation state in an interconnected manner with the system power supply and supply the alternating-current electric power by the power converter alone to the load in the autonomous operation state.

A load control method of an aspect of the present disclosure includes a control process of controlling a load. The load is configured to be operated by electric power supplied from at least one of a power converter or a system power supply. The power converter is configured to convert direct-current electric power supplied from a distributed power supply into alternating-current electric power. An operation mode of the load includes a first operation mode in which the load is operated by the alternating-current electric power supplied from the system power supply and a second operation mode in which power consumption of the load is lower or an amount of power consumption of the load is smaller than in the first operation mode. The control process includes, when detecting that the power converter is operating in an autonomous operation state, controlling the operation mode of the load such that the load operates in the second operation mode.

A program of an aspect of the present disclosure is a program configured to cause one or more processors to execute the load control method.

### Brief Description of Drawings

FIG. 1 is a schematic block diagram of a load control system according to an embodiment of the present disclosure and a distributed power supply system including the load control system; and
FIG. 2 is a sequence diagram illustrating operation of the load control system, a power converter of a power conversion system including the load control system, and loads.

### Description of Embodiments

### (Embodiment)

### (1) Overview

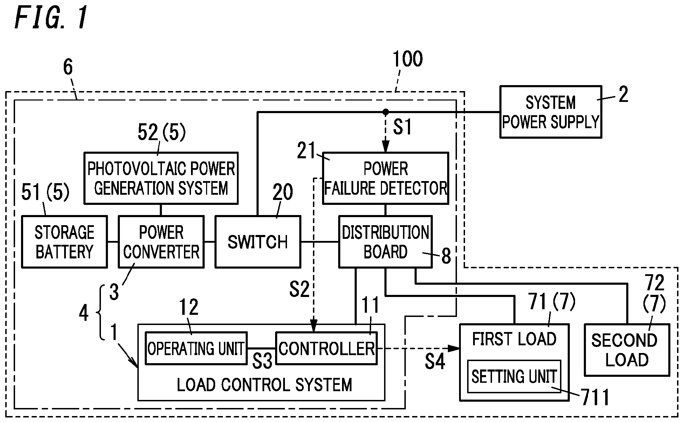

As shown in FIG. 1, a load control system 1 of the present embodiment is used to control a load 7 (at least including a first load 71 in the present embodiment) used in a facility 100. The load control system 1 is used by being installed in the facility 100 such as a detached house or a dwelling unit of a multiple dwelling house. Note that the facility 100 in which the load control system 1 is installed is not limited to a detached house or each dwelling unit of a multiple dwelling house. The load control system 1 may be installed in a non-residential building (e.g., a factory, a commercial building, an office building, a hospital, or a school).

As shown in FIG. 1, the load control system 1 of the present embodiment includes a controller 11 configured to control the load (the first load 71). The load (the first load 71) is operated by electric power supplied from at least one of a power converter 3 or a system power supply 2. The power converter 3 is configured to convert direct-current electric power supplied from a distributed power supply 5 into alternating-current electric power. An operation mode of the load (the first load 71) includes a first operation mode in which the load (the first load 71) is operated by the alternating-current electric power supplied from the system power supply 2 and a second operation mode in which power consumption of the load (the first load 71) is lower or an amount of power consumption of the load (the first load 71) is smaller than in the first operation mode. The controller 11 is configured to, when detecting that the power converter 3 is operating in an autonomous operation state, control the operation mode of the load (the first load 71) such that the load (the first load 71) operates in the second operation mode.

Here, the distributed power supply 5 is a power supply configured to supply electric power to the load (the first load 71) in an interconnected manner with the system power supply 2. In the present embodiment, the distributed power supply 5 includes a storage battery 51 and a photovoltaic power generation system 52. Note that the distributed power supply 5 is not limited to the storage battery 51 or the photovoltaic power generation system 52, and examples of the distributed power supply 5 may include a fuel cell, a power generation system by wind, and a micro-hydroelectric power generation system.

An operation state of the power converter 3 includes at least an interconnect operation state and an autonomous operation state. The interconnect operation state is an operation state where the power converter 3 converts the direct-current electric power supplied from the distributed power supply 5 into the alternating-current electric power and supplies the electric power to the load 7 in an interconnected manner with the system power supply 2 or performs reverse power flow of the alternating-current electric power to the system power supply 2. The autonomous operation state is an operation state where, for example, in a power failure state where the system power supply 2 is in a power failure, the power converter 3 converts the direct-current electric power supplied from the distributed power supply 5 into the alternating-current electric power and the power converter 3 alone supplies the electric power to the load 7.

The load 7 used in the facility 100 includes the first load 71 and a second load 72. The first load 71 includes a load whose rated power consumption is higher than that of the second load 72. Examples of such a load include a heat pump water heater, an IH cooking apparatus, an air conditioner, and a freezer refrigerator. The first load 71 is a load whose operation mode is controlled by the controller 11 to be the first operation mode or the second operation mode. The second operation mode is an operation mode in which the power consumption of the first load 71 is lower or the amount of power consumption is smaller than in the first operation mode in which the first load 71 is operated by the alternating-current electric power supplied from the system power supply 2.

The second operation mode may include, for example, a low electric power operation state where the first load 71 operates with the power consumption being suppressed compared to the power consumption in the first operation mode. In the case of the load (the first load 71) being a heat pump water heater, the low electric power operation state is, for example, an operation mode in which a boiling temperature, the boiling amount of hot water, or the like is set to a lower temperature, a smaller amount, or the like than in the first operation mode, and thereby, the power consumption is suppressed compared to the first operation mode. In the case of the load (the first load 71) being an IH cooking apparatus whose power consumption is adjustable, the second operation mode is an operation mode in which the IH cooking apparatus is used with the power consumption being restricted compared to that in the first operation mode. In the case of the load (the first load 71) being an IH cooking apparatus including a plurality of heaters, the second operation mode may be an operation state where use of some of the plurality of heaters is suspended.

Moreover, the second operation mode may include a stop state where the load (the first load 71) stops operating. In the case of the load being the heat pump water heater, the stop state is, for example, a state where hot or cold water in the hot water storage tank is not heated but electric power is supplied to only a controller of the heat pump water heater, and the stop state is an operation mode in which the power consumption is much lower than in the low electric power operation state.

Moreover, the second operation mode may be an operation mode in which the amount of power consumption is smaller than the amount of power consumption in the first operation mode. In the case of the load (the first load 71) being the heat pump water heater, the boiling amount of hot water may be reduced and/or the boiling temperature may be set to a relatively low temperature such that the second operation mode is an operation mode in which the amount of power consumption until the boiling operation ends is smaller than in the first operation mode. That is, the second operation mode may be an operation mode in which the amount of power consumption is reduced by, for example, shortening an operation time with instantaneous power consumption being the same as that in the first operation mode. Moreover, the second load 72 is a load whose rated power consumption is lower than that of the first load 71, and examples of such a load include a lighting fixture.

When the controller 11 detects that the power converter 3 is operating in an autonomous operation state, the controller 11 controls the operation mode of the load (the first load 71) such that the load (the first load 71) operates in the second operation mode. Thus, when the power converter 3 is operating in the autonomous operation state, the operation mode of the load (the first load 71) is controlled to be the second operation mode, and therefore, while the power converter 3 operates in the autonomous operation state, the power consumption or the amount of power consumption of the load (the first load 71) can be reduced. Thus, the case where in the autonomous operation state, the power converter 3 converts the direct-current electric power received from the storage battery 51 into the alternating-current electric power and supplies the alternating-current electric power to the load (the first load 71) provides the advantage of reducing the possibility of an unintentional reduction in the power storage capacity of the storage battery 51.

### (2) Details

The load control system 1 of the present embodiment, and a power conversion system 4 and a distributed power supply system 6 which include the load control system 1 will be described below with reference to FIG. 1.

### (2.1) Configuration

The load control system 1, the power converter 3, a distribution board 8, a plurality of loads 7, a switch 20, and a power failure detector 21 are provided in the facility 100. Moreover, in the facility 100, the storage battery 51 and the photovoltaic power generation system 52 are each provided as the distributed power supply 5.

Each of these components will be described below.

The loads 7 are electric appliances used in the facility 100 and include the first load 71 and the second load 72.

The first load 71 is a load whose operation mode is controllable by the load control system 1. The first load 71 is a load whose rated power consumption is higher than that of the second load 72. The operation mode of the first load 71 includes: the first operation mode in which the first load 71 is operated by the alternating-current electric power supplied from the system power supply 2; and the second operation mode in which the power consumption is lower than in the first operation mode. Note that the second operation mode may be an operation mode in which the amount of power consumption is smaller than in the first operation mode or an operation mode in which the power consumption is lower and the amount of power consumption is smaller than in the first operation mode. The first load 71 operates, based on a control signal S4 input from the load control system 1 to the first load 71, either in the first operation mode or the second operation mode. Note that when the first load 71 receives no control signal S4 from the load control system 1, the first load 71 operates in the first operation mode (an operation mode in which neither the power consumption nor the amount of power consumption is suppressed). In other words, the load control system 1 can cause the first load 71 to operate in one of the first control mode or the second control mode.

The present embodiment describes an example in which the first load 71 is a natural refrigerant heat pump water heater. That is, in the present embodiment, the load (the first load 71) whose operation mode is controlled by the controller 11 includes the heat pump water heater. The natural refrigerant heat pump water heater adopts a natural refrigerant, such as carbon dioxide, as a cooling medium of a heat exchanger, heats hot or cold water in a hot water storage tank by the heat exchanger, and supplies hot water in the hot water storage tank to a hot-water supply load. The first load 71 includes a setting unit 711 for setting an operation time zone of the first load 71. A user of the first load 71 sets the operation time zone by using the setting unit 711, so that the first load 71 operates in the operation time zone set by the setting unit 711. For example, the heat pump water heater is used in such usage that hot or cold water in the hot water storage tank is boiled in, for example, a late-evening time zone in which the unit price of electric power is lower than in other time zones. In the case where the operation time zone is set to the late-evening time zone by the setting unit 711, the first load 71 automatically starts heating operation of heating hot or cold water in the hot water storage tank at the beginning of the operation time zone set by the setting unit 711. Note that the first load 71 is not limited to the heat pump water heater but may be an IH cooking apparatus, an air conditioner, a freezer refrigerator, or the like.

The second load 72 is a load, other than the first load 71, of the loads 7 used in the facility 100, and examples of the second load 72 include a television receiver, a vacuum cleaner, and a laundry machine.

The switch 20 is electrically connected between the distribution board 8 and each of the system power supply 2 and the power converter 3. The switch 20 is used by a user of the distributed power supply system 6 to switch between carrying out and not carrying out backup power supplying of supplying the alternating-current electric power from the power converter 3 to the loads 7 while the system power supply 2 is in a power failure. When the user operates the switch 20 such that the backup power supplying is not carried out, no alternating-current electric power is supplied also from the power converter 3 to the loads 7 in the case of the power failure of the system power supply 2, and therefore, the loads 7 stop operating. In contrast, when the user operates the switch 20 such that the backup power supplying is carried out, the alternating-current electric power is supplied from the power converter 3 via the switch 20 and the distribution board 8 to the loads 7 in the case of the power failure of the system power supply 2, and therefore, the loads 7 in the facility 100 can be caused to operate. Note that in the present embodiment, the user manually switches, by using the switch 20, between carrying out and not carrying out the backup power supplying, but, for example, the controller 11 of the load control system 1 may control the switch 20 to automatically switch between carrying out and not carrying out the backup power supplying. The controller 11 of the load control system 1 may automatically switch between carrying out and not carrying out the backup power supplying depending on the amount of electric power suppliable from the distributed power supply 5 (e.g., the residual amount of stored electricity in the storage battery 51 or electric power generated by the photovoltaic power generation system 52) or the like.

The storage battery 51 and the photovoltaic power generation system 52 are, each as the distributed power supply 5, electrically connected to the power converter 3. The power converter 3 converts the direct-current electric power supplied from the storage battery 51 and the photovoltaic power generation system 52 into the alternating-current electric power and outputs the alternating-current electric power via the switch 20 to the distribution board 8 or outputs (performs reverse power flow of) the alternating-current electric power to the system power supply 2. Moreover, the power converter 3 converts the voltage value of a direct-current voltage output from the photovoltaic power generation system 52 and charges the storage battery 51. Note that the power converter 3 may convert the alternating-current electric power supplied from the system power supply 2 via the switch 20 into the direct-current electric power and charge the storage battery 51.

Examples of the storage battery 51 connected to the power converter 3 include a lithium ion storage battery and a nickel hydrogen storage battery. As the storage battery 51 to be connected to the power converter 3, a plurality of types of storage batteries 51 different from each other in terms of the power storage capacity are available. A user at least selects a storage battery 51 having a desired power storage capacity from the plurality of types of storage batteries 51 and connects the storage battery 51 thus selected to the power converter 3. Moreover, when the power storage capacity of the storage battery 51 is to be increased, a user may replace the storage battery 51 connected to the power converter 3 with a storage battery 51 having a larger power storage capacity and/or additionally attach another storage battery 51 to increase the power storage capacity of the storage battery 51. Increasing the power storage capacity of the storage battery 51 connected to the power converter 3 enables the direct-current electric power supplied from the storage battery 51 to supply electric power to an increased number of loads 7, and in the present embodiment, the power converter 3 in the autonomous operation state supplies electric power to all the loads 7.

The distribution board 8 supplies the alternating-current electric power, which has been supplied to the distribution board 8 from the system power supply 2 or the power converter 3 via the switch 20, to the loads 7 and the load control system 1 which are electrically connected to branch circuits. That is, the load control system 1 (including the controller 11) is operated by electric power supplied from at least one of the power converter 3 or the system power supply 2.

The power failure detector 21 detects the power failure of the system power supply 2. The power failure detector 21 monitors a voltage signal S1 according to the voltage level of an alternating-current voltage input from the system power supply 2, thereby determining whether or not the system power supply 2 is in a power failure. For example, if the peak value of the voltage signal S1 falls below a prescribed threshold, the power failure detector 21 determines that the system power supply 2 is in a power failure, and the power failure detector 21 outputs, to the controller 11 of the load control system 1, a power failure notification signal S2 including power failure information representing the power failure of the system power supply 2.

The load control system 1 includes the controller 11 and an operating unit 12. The load control system 1 is embodied by, for example, a controller of an energy management system that manages energy used in the facility 100. The load control system 1 includes a computer system including memory and a processor as main components. That is, the processor executes a program stored in the memory of the computer system, thereby implementing functions of the load control system 1 (functions of the controller 11 and the operating unit 12). The program may be stored in the memory in advance, may be provided via a telecommunications network such as the Internet, or may be provided by a non-transitory storage medium such as a memory card storing the program.

The operating unit 12 includes, for example, a touch panel provided at a surface of a display device such as a liquid crystal display. The operating unit 12 receives an operation input given by a user and outputs, to the controller 11, an operation signal S3 according to the operation input. Note that the operating unit 12 is not limited to the touch panel but may include a mechanical switch and the like.

The controller 11 controls, for example, the operation mode of the first load 71. When the controller 11 is supplied with the alternating-current electric power and starts operating, the controller 11 acquires a detection result regarding a power failure from the power failure detector 21, and based on the detection result regarding the power failure, the controller 11 determines whether or not the power converter 3 is operating in the autonomous operation state.

If the controller 11 does not receive the power failure notification signal S2 from the power failure detector 21, the controller 11 determines that the power converter 3 is in the interconnect operation state, and the controller 11 does not control the operation mode of the first load 71 such that the first load 71 operates in the second operation mode. Thus, when the first load 71 is operated by the alternating-current electric power supplied from the system power supply 2, the first load 71 operates in the first operation mode (an operation mode in which neither the power consumption nor the amount of power consumption is suppressed).

If the controller 11 receives the power failure notification signal S2 from the power failure detector 21, the controller 11 determines that the system power supply 2 is in a power failure and the power converter 3 is in the autonomous operation state, and the controller 11 outputs, to the first load 71, a control signal S4 which controls the operation mode such that the first load 71 operates in the second operation mode. In response to receiving, from the controller 11, the control signal S4 which controls the operation mode such that the first load 71 operates in the second operation mode, the first load 71 operates in the second operation mode in which the power consumption is lower or the amount of power consumption is smaller than in the first operation mode.

When the controller 11 determines that a prescribed cancellation condition is satisfied with the operation mode of the first load 71 being controlled to be the second operation mode, the controller 11 outputs, to the first load 71, a control signal S4 which controls the operation mode such that the first load 71 operates in the first operation mode. In response to receiving this control signal S4, the first load 71 cancels the second operation mode and operates in the first operation mode and can thus operate with neither the power consumption nor the amount of power consumption being suppressed. Here, examples of the "prescribed cancellation condition" include a condition that when the heat pump water heater which is the first load 71 includes a hot water storage tank, the amount of hot water in the hot water storage tank is smaller than or equal to a prescribed set amount of hot water. When the amount of hot water in the hot water storage tank is smaller than or equal to the set amount of hot water, electric power required to heat hot or cold water in the hot water storage tank to a set temperature is less than or equal to required electric power required to boil a larger amount of hot or cold water than the set amount of hot or cold water to the set temperature, which limits a reduction in the power storage capacity of the storage battery 51 to be less than or equal to a reduction amount according to the required electric power. Thus, when the condition that the amount of hot water in the hot water storage tank is smaller than or equal to the prescribed threshold is satisfied, the controller 11 outputs, to the first load 71, the control signal S4 which controls the operation mode such that the first load 71 operates in the first operation mode, thereby causing the first load 71 to operate in the first operation mode. This enables the first load 71 to operate in the first operation mode in which neither the power consumption nor the amount of power consumption is suppressed while the power storage capacity of the storage battery 51 is suppressed from being significantly reduced.

Note that the controller 11 may, based on the operation signal S3 received from the operating unit 12, output, to the first load 71, the control signal S4 which controls the operation mode of the first load 71. For example, when the operating unit 12 receives, from a user, an operation input which switches the operation mode to the first operation mode or the second operation mode, the operating unit 12 outputs, to the controller 11, the operation signal S3 according to the operation input. Based on the operation signal S3 received from the operating unit 12, the controller 11 outputs, to the first load 71, the control signal S4 which controls the operation mode such that the first load 71 operates in the first operation mode or the second operation mode, and thereby, the controller 11 causes the first load 71 to operate in the first operation mode or the second operation mode. Thus, the controller 11 can cause the first load 71 to operate in the operation mode according to the operation given by the user. In this embodiment, the cancellation condition described above may include a condition of receiving, from the operating unit 12, the operation signal S3 which controls the operation mode such that the first load 7 operates in the first operation mode. In this case, in response to an operation, given by a user, for cancelling the second operation mode, the controller 11 can control the operation mode of the first load 71 such that the first load 71 operates in the first operation mode.

Here, the power conversion system 4 of the present embodiment includes the load control system 1 and the power converter 3 described above. The distributed power supply 5 includes the storage battery 51. The power converter 3 converts, for example, the voltage value of a direct-current voltage output from the photovoltaic power generation system 52 and charges the storage battery 51. Note that the power converter 3 may convert the alternating-current electric power received from the system power supply 2 via the switch 20 into the direct-current electric power and charge the storage battery 51.

Moreover, the distributed power supply system 6 of the present embodiment includes the power conversion system 4 and the distributed power supply 5. The operation state of the power converter 3 includes the interconnect operation state and the autonomous operation state. In the interconnect operation state, the power converter 3 supplies the alternating-current electric power to the loads 7 in an interconnected manner with the system power supply 2. In the autonomous operation state, the power converter 3 alone supplies the alternating-current electric power to the loads 7.

### (2.2) Operation

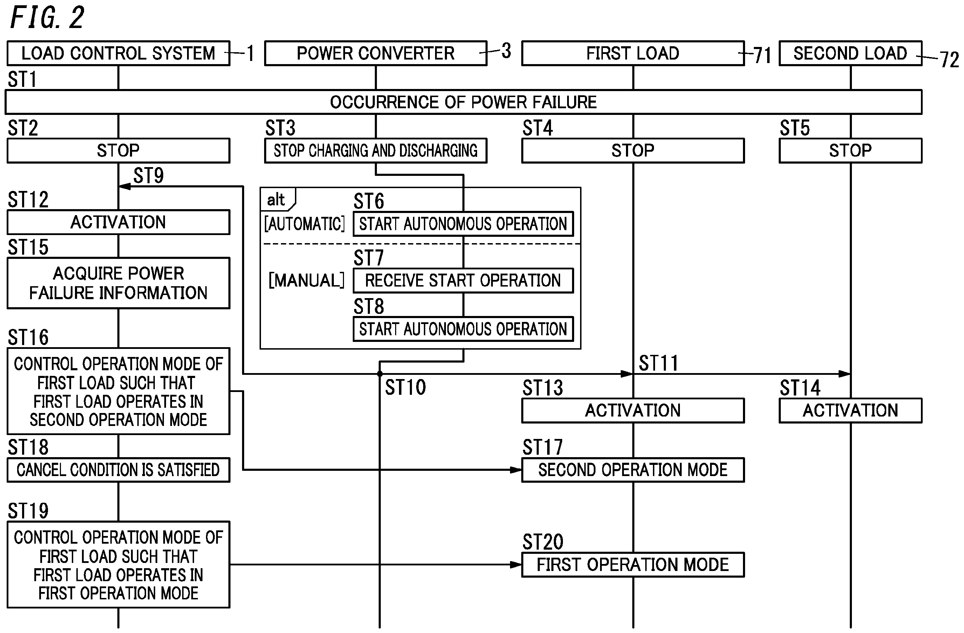

The operation of the load control system 1 of the present embodiment, and a power conversion system 4 and a distributed power supply system 6 which include the load control system 1 will be described with reference to FIG. 2.

In a state where the alternating-current electric power is supplied to the loads 7 from the system power supply 2, the system power supply 2 and the power converter 3 supply the alternating-current electric power to the loads 7 in an interconnected manner with each other, and the loads 7 (the first load 71 and the second load 72) are operated by being supplied with the electric power. Moreover, the system power supply 2 and the power converter 3 supply the alternating-current electric power to the load control system 1 in an interconnected manner with each other, and the load control system 1 is also operated by being supplied with the alternating-current electric power.

When a power failure of the system power supply 2 occurs (ST1) during operation of the loads 7 and the load control system 1, the load control system 1, the first load 71, and the second load 72 stop operating (ST2, ST4, ST5). Moreover, when the power converter 3 detects, with reference to the alternating-current voltage received from the system power supply 2 via the switch 20, the power failure of the system power supply 2, the power converter 3 stops electric power conversion operation (i.e., stops charging/discharging) (ST3).

The power converter 3 includes: a change over switch by which a user switches between automatically starting and manually starting of the autonomous operation when the power failure of the system power supply 2 occurs; and a start switch to which a user gives a start operation for starting the autonomous operation of the power converter 3. When detecting the power failure of the system power supply 2, the power converter 3 checks the switching state of the change over switch to determine whether the autonomous operation is to be automatically started or manually started.

Here, if the change over switch is set such that the autonomous operation is to be automatically started, the power converter 3 automatically starts the autonomous operation (ST6). The power converter 3 converts the direct-current electric power supplied from the storage battery 51 or the photovoltaic power generation system 52 into the alternating-current electric power and supplies the alternating-current electric power via the switch 20 and the distribution board 8 to the load control system 1, the first load 71, and the second load 72 (ST9, ST10, ST11).

If the change over switch is set such that the autonomous operation is to be manually started, the power converter 3 determines whether or not a start operation has been given to the start switch. Here, a user gives an operation to the start switch (ST7), and the power converter 3 then starts the autonomous operation (ST8). The power converter 3 converts the direct-current electric power supplied from the storage battery 51 or the photovoltaic power generation system 52 into the alternating-current electric power and supplies the alternating-current electric power via the switch 20 and the distribution board 8 to the load control system 1, the first load 71, and the second load 72 (ST9, ST10, ST11).

When the power converter 3 starts the autonomous operation and the alternating-current electric power is supplied to the load control system 1, the first load 71, and the second load 72 from the power converter 3, each of the load control system 1, the first load 71, and the second load 72 starts operating (ST12, ST13, ST14).

Here, when the controller 11 of the load control system 1 is supplied with electric power and thus starts operating, the controller 11 checks whether or not the power failure detector 21 has detected the power failure of the system power supply 2. If the controller 11 of the load control system 1 acquires, from the power failure detector 21, the power failure notification signal S2 including power failure information (ST15), the controller 11 determines that the power converter 3 is operating in the autonomous operation state while the system power supply 2 is in the power failure. The controller 11 changes the operation mode of the first load 71, whose power consumption is higher than that of the second load 72, to the second operation mode. The controller 11 outputs, to the first load 71, the control signal S4 which controls the operation mode such that the first load 71 operates in the second operation mode (ST16), and thereby, the operation mode of the first load 71 is controlled to be the second mode (ST17). Here, the second operation mode may be the stop state where the first load 71 stops operating, or a low electric power operation state where the first load 71 operates with lower power consumption than in the first operation mode. Moreover, the second operation mode may be an operation mode in which the first load 71 operates with a smaller amount of power consumption than in the first operation mode.

As described above, in the present embodiment, the controller 11 controls, in response to the detection that the power converter 3 is operating in the autonomous operation state, the operation mode of the load (the first load 71) such that the load (the first load 71) operates in the second operation mode. That is, based on only that the controller 11 detects that the power converter 3 is operating in the autonomous operation state, the controller 11 controls the operation mode of the load (the first load 71) such that the load (the first load 71) operates in the second operation mode. In other words, when the condition that the power converter 3 is operating in the autonomous operation state is satisfied, the controller 11 controls, regardless of other conditions, the operation mode of the first load 71 such that the first load 71 operates in the second operation mode. More precisely, when being operated by being supplied with electric power, the controller 11 detects, in response to acquisition of power failure information representing a power failure of the system power supply 2, that the power converter 3 is operating in the autonomous operation state. That is, as long as the controller 11 operates while the system power supply 2 is in the power failure, it can be determined that the controller 11 is operated by electric power supplied from the power converter 3, and therefore, the controller 11 determines that the power converter 3 is operating in the autonomous operation state without communicating with the power converter 3. Note that when the controller 11 starts operating by being supplied with electric power, the controller 11 may acquire the operation state of the power converter 3 by communicating with the power converter 3 via an appropriate communication means or may directly acquire, from the power converter 3, that the power converter 3 is in the autonomous operation state.

When the controller 11 controls the operation mode of the first load 71 such that the first load 71 operates in the second operation mode, the controller 11 determines whether or not the prescribed cancellation condition is satisfied. The prescribed cancellation condition is, for example, a condition that the amount of hot water in the hot water storage tank of the heat pump water heater which is the first load 71 is smaller than or equal to the prescribed set amount of hot water. When the controller 11 determines that the cancellation condition is satisfied (ST18), the controller 11 outputs, to the first load 71, the control signal S4 which controls the operation mode such that the first load operates in the first operation mode (ST19), and thereby, the operation mode of the first load 71 is controlled to be a first mode (ST20).

Thus, when the controller 11 is supplied with the alternating-current electric power from the power converter 3 at the occurrence of a power failure, the controller 11 immediately switches the operation mode of the first load 71 to the second operation mode. Thus, the controller 11 of the load control system 1 can further reduce the power consumption or the amount of power consumption of the first load 71, compared to the case where the first load 71 is once activated in the first operation mode and the operation mode of the first load 71 is then switched to the second operation mode. Note that in the case of the first load 71 being an IH cooking apparatus, the IH cooking apparatus is not necessarily activated at a time point at which the power converter 3 starts supplying the alternating-current electric power to the first load 71 at the occurrence of a power failure, and operation of the IH cooking apparatus is started at a timing at which a user uses the IH cooking apparatus. The controller 11 monitors the power consumption of the first load 71, thereby monitoring whether or not the first load 71 is started. When the controller 11 detects that the first load 71, such as an IH cooking apparatus, is activated while the power converter 3 operates in the autonomous operation state, the controller 11 outputs, to the first load 71, the control signal S4 which controls the operation mode of the first load 71 such that the first load 71 operates in the second operation mode. Thus, the controller 11 can, at a timing at which the first load 71 is used after the power failure of the system power supply 2, control the operation mode of the first load 71 such that the first load 71 operates in the second operation mode, and thereby, the power consumption or the amount of power consumption of the first load 71 can be suppressed.

Moreover, when the prescribed cancellation condition is satisfied with the controller 11 controlling the operation mode of the load (the first load 71) such that the load (the first load 71) operates in the second operation mode, the controller 11 switches the operation mode of the load (the first load 71) to the first operation mode. When the cancellation condition is satisfied, the controller 11 automatically causes the load (the first load 71) to operate in the first mode, and this means that the controller 11 can cause the load (the first load 71) to operate in the first mode in which neither the power consumption nor the amount of power consumption is suppressed.

Note that the cancellation condition for canceling the second operation mode may include a condition that the operating unit 12 receives, from a user, a cancellation operation for canceling the second operation mode. When the operating unit 12 outputs, to the controller 11, the operation signal S3 according to the cancellation operation given by the user, the controller 11 outputs, to the first load 71, the control signal S4 which causes the first load 71 to operate in the first operation mode, and thereby, the first load 71 operates in the first operation mode. Thus, the operation given by the user can switch the operation mode of the first load 71 from the second operation mode to the first operation mode.

### (3) Variations

The embodiment described above is merely an example of various embodiments of the present disclosure. The embodiment described above may be modified in various manners depending on a design choice or any other factor as long as the object of the present disclosure is achieved. Moreover, functions similar to those of the load control system 1 may be implemented by, for example, a load control method, a computer program, or a non-transitory recording medium in which a program is stored. A load control method of an aspect includes a control process of controlling a load (the first load 71). The load (the first load 71) is operated by electric power supplied from at least one of a power converter 3 or a system power supply 2. The power converter 3 is configured to convert direct-current electric power supplied from a distributed power supply 5 (a storage battery 51 and a photovoltaic power generation system 52) into alternating-current electric power. An operation mode of the load includes a first operation mode in which the load is operated by the alternating-current electric power supplied from the system power supply 2 and a second operation mode in which power consumption of the load is lower or an amount of power consumption of the load is smaller than in the first operation mode. The control process includes, when detecting that the power converter 3 is operating in an autonomous operation state, controlling the operation mode of the load (the first load 71) such that the load (the first load 71) operates in the second operation mode. A (computer) program according to an aspect is a program configured to cause one or more processors to execute the load control method.

Variations of the embodiment described above will be described below. Note that any of the variations to be described below may be combined as appropriate.

The load control system 1, the power conversion system 4, and the distributed power supply system 6 of the present disclosure include a computer system. The computer system includes a processor and a memory as principal hardware components. The processor executes a program stored in the memory of the computer system, thereby realizing the function as the load control system 1, the power conversion system 4, and the distributed power supply system 6 of the present disclosure. The program may be stored in the memory of the computer system in advance, provided via telecommunications network, or provided as a non-transitory recording medium such as a computer system-readable memory card, optical disc, or hard disk drive storing the program. The processor of the computer system may be made up of a single or a plurality of electronic circuits including a semiconductor integrated circuit (IC) or a largescale integrated circuit (LSI). The integrated circuit such as IC or LSI mentioned herein may be referred to in another way, depending on the degree of the integration and includes integrated circuits called system LSI, very-large-scale integration (VLSI), or ultra-large-scale integration (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. The plurality of electronic circuits may be collected on one chip or may be distributed on a plurality of chips. The plurality of chips may be collected in one device or may be distributed in a plurality of devices. As mentioned herein, the computer system includes a microcontroller including one or more processors and one or more memories. Thus, the microcontroller is also composed of one or more electronic circuits including a semiconductor integrated circuit or a large-scale integrated circuit.

Moreover, collecting a plurality of functions of the load control system 1, the power conversion system 4, and the distributed power supply system 6 in one housing is not an essential configuration for the load control system 1, the power conversion system 4, and the distributed power supply system 6. Components of the load control system 1, the power conversion system 4, and the distributed power supply system 6 may be distributed in a plurality of housings. Moreover, at least some functions of the load control system 1, the power conversion system 4, and the distributed power supply system 6, for example, some functions of the load control system 1, the power conversion system 4, and the distributed power supply system 6 may be implemented by cloud (cloud computing) or the like.

### (Summary)

As described above, a load control system (1) of a first aspect includes a controller (11) configured to control a load (71). The load (71) is configured to be operated by electric power supplied from at least one of a power converter (3) or a system power supply (2). The power converter (3) is configured to convert direct-current electric power supplied from a distributed power supply (5) into alternating-current electric power. An operation mode of the load (71) includes a first operation mode in which the load (71) is operated by the alternating-current electric power supplied from the system power supply (2) and a second operation mode in which power consumption of the load is lower or an amount of power consumption of the load is smaller than in the first operation mode. The controller (11) is configured to, when detecting that the power converter (3) is operating in an autonomous operation state, control the operation mode of the load (71) such that the load (71) operates in the second operation mode.

This aspect provides the load control system (1) configured to reduce the power consumption or the amount of power consumption of the load (71) while the power converter (3) is operating in the autonomous operation state.

In a load control system (1) of a second aspect referring to the first aspect, the load (71) includes a setting unit (711) configured to set an operation time zone. The load (71) is configured to operate in the operation time zone set by the setting unit (711).

This aspect reduces the power consumption or the amount of power consumption of also the load (71), which is configured to operate in the operation time zone set by the setting unit (711), by causing the load (71) to operate in the second operation mode while the power converter (3) is operating in the autonomous operation state.

In a load control system (1) of a third aspect referring to the first or second aspect, the controller (11) is configured to, when a prescribed cancellation condition is satisfied with the operation mode of the load (71) being controlled to be the second operation mode, control the operation mode of the load (71) such that the load (71) operates in the first operation mode.

This aspect enables, when the cancellation condition is satisfied, the load (71) to operate in the first operation mode in which neither the power consumption nor the amount of power consumption is suppressed.

In a load control system (1) of a fourth aspect referring to any one of the first to third aspects, the load (71) includes a heat pump water heater.

This aspect enables the power consumption or the amount of power consumption of the heat pump water heater to be reduced while the power converter (3) is operating in the autonomous operation state.

In a load control system (1) of a fifth aspect referring to any one of the first to fourth aspects, the controller (11) is configured to, in response to detection that the power converter (3) is operating in the autonomous operation state, control the operation mode of the load (71) such that the load (71) operates in the second operation mode.

This aspect provides the load control system (1) configured to reduce the power consumption or the amount of power consumption of the load (71) while the power converter (3) is operating in the autonomous operation state.

In a load control system (1) of a sixth aspect referring to any one of the first to fifth aspects, the controller (11) is configured to be operated by the electric power supplied from at least one of the power converter (3) or the system power supply (2). The controller (11) is configured to, when operated by being supplied with the electric power, detect, in response to acquisition of power failure information representing a power failure of the system power supply (2), that the power converter (3) is operating in the autonomous operation state.

This aspect enables the controller (11) to detect, without communicating with the power converter (3), that the power converter (3) is operating in the autonomous operation state.

In a load control system (1) of a seventh aspect referring to any one of the first to sixth aspects, the second operation mode includes a stop state where the load (71) stops operating.

This aspect enables the power consumption and the amount of power consumption of the load (71) to be reduced by bringing the load (71) into a stop state while the power converter (3) is operating in the autonomous operation state.

In a load control system (1) of an eighth aspect referring to any one of the first to sixth aspects, the second operation mode includes a low electric power operation state where the load (71) operates with the power consumption being suppressed compared to the power consumption in the first operation mode.

This aspect enables the power consumption of the load (71) to be reduced by bringing the load (71) into the low electric power operation state while the power converter (3) is operating in the autonomous operation state.

In a power conversion system (4) of a ninth aspect with reference to any one of the first to sixth aspects, the second operation mode is an operation mode in which the amount of power consumption of the load (71) is smaller than the amount of power consumption of the load (71) in the first operation mode.

This aspect enables the amount of power consumption of the load (71) to be reduced while the power converter (3) is operating in the autonomous operation state.

A power conversion system (4) of a tenth aspect includes the load control system (1) of any one of the first to ninth aspects, and the power converter (3). The distributed power supply (5) includes a storage battery (51).

This aspect provides the power conversion system (4) configured to reduce the power consumption or the amount of power consumption of the load (71) while the power converter (3) is operating in the autonomous operation state.

A distributed power supply system (6) of an eleventh aspect includes the power conversion system (4) of the tenth aspect, and the distributed power supply (5) of the tenth aspect. The power converter (3) is configured to convert the direct-current electric power supplied from the distributed power supply (5) into the alternating-current electric power and supply the alternating-current electric power to the load (71) in an interconnected manner with the system power supply (2). An operation state of the power converter (3) includes an interconnect operation state and the autonomous operation state. The power converter (3) is configured such that in the interconnect operation state, the power converter (3) supplies, in an interconnected manner with the system power supply (2), the alternating-current electric power to the load (71), and in the autonomous operation state, the power converter (3) alone supplies the alternating-current electric power to the load (71).

This aspect provides the distributed power supply system (6) configured to reduce the power consumption or the amount of power consumption of the load (71) while the power converter (3) is operating in an autonomous operation state.

A load control method of a twelfth aspect includes a control process of controlling a load (71). The load (71) is configured to be operated by electric power supplied from at least one of a power converter (3) or a system power supply (2). The power converter (3) is configured to convert direct-current electric power supplied from a distributed power supply (5) into alternating-current electric power. An operation mode of the load (71) includes a first operation mode in which the load (71) is operated by the alternating-current electric power supplied from the system power supply (2) and a second operation mode in which power consumption of the load is lower or an amount of power consumption of the load is smaller than in the first operation mode. The control process includes, when detecting that the power converter (3) is operating in an autonomous operation state, controlling the operation mode of the load (71) such that the load (71) operates in the second operation mode.

This aspect provides the load control method which reduces the power consumption or amount of power consumption of the load (71) while the power converter (3) is operating in an autonomous operation state.

A program of a thirteenth aspect is a program configured to causing one or more processors to execute the load control method of the twelfth aspect.

This aspect reduces the power consumption or the amount of power consumption of the load (71) while the power converter (3) is operating in an autonomous operation state.

The aspects should not be construed as limiting, but various configurations (including variations) of the load control system (1) of the embodiment may be embodied by, for example, a load control method, a (computer) program, or a non-transitory recording medium in which a program is stored.

The configurations according to the second to ninth aspects are not configurations essential for the load control system (1) and may thus be accordingly omitted.

### Reference Signs List

- 1: Load Control System
- 2: System Power Supply
- 3: Power Converter
- 4: Power Conversion System
- 5: Distributed Power Supply
- 6: Distributed Power Supply System
- 11: Controller
- 51: Storage Battery
- 71: First Load (Load)
- 711: Setting Unit

## Claims

1. A load control system, comprising
a controller configured to control a load,
the load being configured to be operated by electric power supplied from at least one of a power converter or a system power supply,
the power converter being configured to convert direct-current electric power supplied from a distributed power supply into alternating-current electric power,
an operation mode of the load including
a first operation mode in which the load is operated by the alternating-current electric power supplied from the system power supply and
a second operation mode in which power consumption of the load is lower or an amount of power consumption of the load is smaller than in the first operation mode,
the controller being configured to, when detecting that the power converter is operating in an autonomous operation state, control the operation mode of the load such that the load operates in the second operation mode.

2. The load control system of claim 1, wherein
the load includes a setting unit configured to set an operation time zone, and
the load is configured to operate in the operation time zone set by the setting unit.

3. The load control system of claim 1 or 2, wherein
the controller is configured to, when a prescribed cancellation condition is satisfied with the operation mode of the load being controlled to be the second operation mode, control the operation mode of the load such that the load operates in the first operation mode.

4. The load control system of any one of claims 1 to 3, wherein
the load includes a heat pump water heater.

5. The load control system of any one of claims 1 to 4, wherein
the controller is configured to, based on only detection that the power converter is operating in the autonomous operation state, control the operation mode of the load such that the load operates in the second operation mode.

6. The load control system of any one of claims 1 to 5, wherein
the controller is configured to be operated by the electric power supplied from at least one of the power converter or the system power supply,
the controller is configured to, when operated by being supplied with the electric power, detect, in response to acquisition of power failure information representing a power failure of the system power supply, that the power converter is operating in the autonomous operation state.

7. The load control system of any one of claims 1 to 6, wherein
the second operation mode includes a stop state where the load stops operating.

8. The load control system of any one of claims 1 to 6, wherein
the second operation mode includes a low electric power operation state where the load operates with the power consumption being suppressed compared to the power consumption in the first operation mode.

9. The load control system of any one of claims 1 to 6, wherein
the second operation mode is an operation mode in which the amount of power consumption of the load is smaller than the amount of power consumption of the load in the first operation mode.

10. A power conversion system, comprising:
the load control system of any one of claims 1 to 9; and
the power converter,
the distributed power supply including a storage battery.

11. A distributed power supply system, comprising:
the power conversion system of claim 10; and
the distributed power supply of claim 10;
an operation state of the power converter including an interconnect operation state and the autonomous operation state,
the power converter being configured such that in the interconnect operation state, the power converter supplies, in an interconnected manner with the system power supply, the alternating-current electric power to the load, and in the autonomous operation state, the power converter alone supplies the alternating-current electric power to the load.

12. A load control method, comprising
a control process of controlling a load,
the load being configured to be operated by electric power supplied from at least one of a power converter or a system power supply,
the power converter being configured to convert direct-current electric power supplied from a distributed power supply into alternating-current electric power,
an operation mode of the load including
a first operation mode in which the load is operated by the alternating-current electric power supplied from the system power supply and
a second operation mode in which power consumption of the load is lower or an amount of power consumption of the load is smaller than in the first operation mode,
the control process including, when detecting that the power converter is operating in an autonomous operation state, controlling the operation mode of the load such that the load operates in the second operation mode.

13. A program configured to cause one or more processors to execute the load control method of claim 12.
